# EUROPÄISCHE PATENTANMELDUNG

(11) **EP 1 825 756 A1**
(43) Veröffentlichungstag der Anmeldung: **29.08.2007**
(21) Anmeldenummer: 07101645.5
(22) Anmeldetag: 02.02.2007
(51) Int. Cl.: A21D 13/00

(54) **Waffelgebäck**

(30) Priorität: 24.02.2006 AT 3132006
(71) Anmelder: HAAS, Franz, 1010 Wien (AT)
(72) Erfinder: HAAS, Franz, 1010 Wien (AT)
(74) Vertreter: Müllner, Martin

(57) **Zusammenfassung**

Ein Waffolgebäck aus mindestens zwei Waffelblättern (1, 2) mit dazwischen vorgesehener Cremefüllung (3), die vorzugsweise aufgeschlagen bzw. aufgeschäumt ist und leichte essbare Festkörper (4) wie z.B. Weizencrispies enthält, weist etwa mittig im Inneren der Cremefüllung (3) eine Trennschicht (5) auf. Diese besteht aus einem vorgefertigten essbaren plastischen Material und kann mit Durchbrüchen (6) ausgebildet sein. Es eignet sich ein getrockneter Film aus Marmelade oder aber Marzipan. Die Trennschicht (5) kann in Wellen aufgebracht sein. Ein Verfahren zur Herstellung der Trennschicht (5) auf der Basis von Marmelade oder dergleichen sieht das Aufbringen derselben auf eine beheizte oder wärmebestrahlte Unterlage und das Verteilen in Filmstärke sowie die Abnahme bei einem Wassergehalt von weniger als 10% vor.

## Beschreibung

### Technisches Gebiet

Die Erfindung betrifft ein Waffelgebäck aus mindestens zwei Waffelblättern mit dazwischen vorgesehener Cremefüllung.

### Stand der Technik

Waffelschnitten mit Füllung sind als Nahrungs- bzw. Genussmittel sehr beliebt. Cremefüllungen werden infolge des wachsenden Kalorienbewusstseins aufgeschäumt bzw. aufgeschlagen. Der Luftanteil im Fett der Creme reduziert die spezifische Masse von 1 g/cm³ und darüber (für gehaltvolle Cremen) in vielen Fällen auf 0,6 g/cm³. Wenn einer Creme noch leichte Zuschlagstoffe wie Popcorn, Reiscrispies oder dergleichen beigegeben werden, dann kann die spezifische Masse noch unter 0,6 g/cm³ gedrückt werden.

Ein Nachteil bei hohen Cremefüllungen liegt darin, dass die abdeckenden Waffelblätter nicht ausreichend auf der Cremefüllung stabilisiert werden und dass schon geringe Scherkräfte genügen, um den Waffelverbund parallel zu verschieben.

Durch eine Ummantelung z.B. durch Schokolade (auch unter Beigabe von Krokant, Nüssen oder Crispies, z.B. Weizenkeimcrispies) kann eine Stabilisierung der Form erreicht werden. Wenn allerdings eine solche äußere Ummantelung nicht gewünscht wird oder nicht ausreicht, dann müssen andere Maßnahmen getroffen werden. **Darstellung der Erfindung**

### Technische Aufgabe

Die Erfindung zielt darauf ab, ein Waffelgebäck der eingangs beschriebenen Art weitgehend formstabil auszubilden.

### Technische Lösung

Dies wird mit einem Schichtaufbau besonderer Art dadurch erreicht, dass die Cremefüllung insbesondere mit einer aufgeschäumten Creme mit einer spezifischen Masse von weniger als 1 g/cm³ essbare Festkörper mit einer spezifischen Masse von weniger als 0,8 g/cm³, wie Reis-, Weizen- oder Popcornflocken, enthält, dass die Schicht der Cremefüllung etwa mittig unterteilt ist und zur Teilung eine vorgefertigte essbare und plastisch verformbare Trennschicht, die gegebenenfalls örtlich Durchbrüche aufweist, vorgesehen ist. Wenn also die Schichtstärke der Cremefüllung zu groß ist, dann wird diese durch die Trennschicht unterteilt. Durch die allfällige Inhomogenität der Cremefüllung speziell infolge der beigegebenen Feststoffe verformt sich die Trennschicht. Es bilden sich beiderseits lokale Einbuchtungen, in die die Feststoffe eingreifen. Dadurch entsteht eine Art Verriegelung im Inneren des Waffelverbundes. Die Gesamtform bleibt auch bei üblichen Scherkräften erhalten.

Es ist zweckmäßig, wenn die plastisch verformbare Trennschicht ein Film aus getrockneter Marmelade mit einem Wasseranteil von weniger als 10% ist. Die Marmelade wird in einer Vorstufe der Herstellung dünn auf einem Untergrund aufgetragen und dort getrocknet. Dieser Film von 0,5 bis etwa 5 mm Stärke wird in die Cremefüllung eingelegt. Gelierte, getrocknete Marmelade bildet sehr rasch ein Häutchen, das der Cremefüllung und damit dem Waffelgebäck die nötige Stabilität verleiht. Eine Alternative ist dadurch gekennzeichnet, dass die plastisch verformbare Trennschicht aus einer Lage aus Marzipan besteht. Die Dünnschicht wird durch Walzen hergestellt und beim Schichtenaufbau etwa mittig in die Cremefüllung eingelegt.

Eine besonders zweckmäßige Ausführungsform ist dadurch gekennzeichnet, dass die Trennschicht schmäler und gegebenenfalls kürzer ist als die Breite und die Länge des fertigen Waffelgebäcks. Die Cremefüllung umfängt somit die Trennschicht, die hier als stabilisierende Einlage ausgebildet ist. Der Effekt der Verankerung ist besonders groß. Weiters kann ein solches Waffelgebäck aus einer Platte mit einer Breite von z.B. 40 cm sehr gut geschnitten werden, weil bloß die Waffelblätter und die Cremefüllung, nicht aber die allenfalls klebrige Trennschicht durchschnitten werden muss.

Eine weitere Steigerung der Festigkeit des Waffelverbundes kann dadurch erreicht werden, dass die Trennschicht in faltiger oder welliger Form in der Füllung vorgesehen ist. Wenn etwa die Trennschicht mit größerer Geschwindigkeit zugeführt wird, als es dem Vorschub des Waffelgebäckes während der Endfertigung entspricht, dann ergeben sich die Wellen von selbst. Diese Struktur bildet eine Verzahnung, die durch die Festkörper noch in ihrer Wirkung unterstützt wird. Die halbe Schichtstärke der Cremefüllung entspricht mindestens dem Durchmesser eines Festkörpers (Reiscrispies...) in der Creme. Wie erwähnt kann die plastisch verformbare Trennschicht Durchbrüche aufweisen, die in einer besonderen Ausgestaltung durch zungenartige Ausstanzungen gebildet sind, wobei die Zungen aus der Ebene des Filmes herausgebogen sind. Die Einschnitte oder Ausstanzungen sind also beispielsweise U-förmig, um Zungen zu bilden, die sich in der Cremefüllung festkrallen können.

Das Verfahren zur Herstellung einer plastisch verformbaren Trennschicht für ein Waffelgebäck gemäß der Erfindung ist dadurch gekennzeichnet, dass Marmelade in halbflüssiger Form auf eine beheizte oder wärmebestrahlte Unterlage, z.B. ein Stahlband oder eine Trommel aufgebracht und auf Filmstärke verteilt wird und bei einem Wassergehalt von weniger als 10% von der Unterlage als Folie abgenommen und zur Zwischenlage innerhalb einer Cremefüllung einer Waffel oder unmittelbar zwischen zwei Waffeln abgelegt wird. Bei kontinuierlicher Produktion kann die Trennschicht fortlaufend auf der Unterlage, z.B. Trommel, hergestellt werden. Dabei ist es auch möglich, Durchbrüche vorzusehen. Durch diese greift dann die Cremefüllung von der unteren zur oberen Hälfte der Füllungsstärke. Ein besonders stabiles Endprodukt wird dadurch erhalten. Wenn die so gebildete Marmeladefolie als Einlage unmittelbar zwischen zwei Waffeln gelegt wird, dann bleiben diese resch und knusprig.

### Kurze Beschreibung der Abbildungen der Zeichnungen

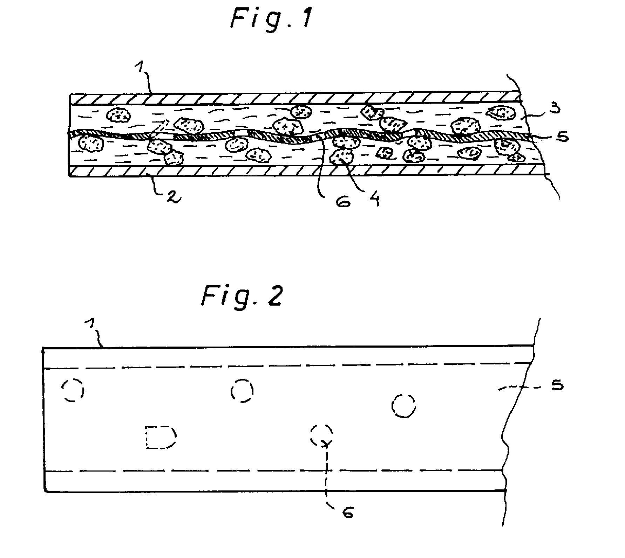

Ein Ausführungsbeispiel für ein Waffelgebäck gemäß der Erfindung ist in den Zeichnungen dargestellt. Fig. 1 zeigt einen Querschnitt durch einen Teil eines Waffelriegels und Fig. 2 die Draufsicht mit einer im Inneren des Waffelriegels strichliert dargestellten Trennschicht.

### Bester Weg zur Ausführung der Erfindung

Ein Waffelgebäck gemäß Fig. 1 hat die Form eines Waffelriegels. Zwischen zwei Waffelblättern 1, 2 ist als Füllung eine Creme 3 eingebracht. Diese kann als besonders leichte Creme aufgeschäumt oder mit Luft aufgeschlagen sein und essbare Festkörper 4 wie Knusperreis bzw. Reiscrispies oder dergleichen enthalten. Dadurch kann die spezifische Masse einer Creme 3, die gewöhnlich größer als 1 g/cm³ ist, auf weniger als 1 g/cm³, z.B. 0,6 g/cm³ und darunter abgesenkt werden. Der Abstand der beiden Waffelblätter 1 und 2 zueinander ist verhältnismäßig groß und daher besteht die Gefahr, dass der Waffelverbund unstabil wird - dies insbesondere bei einer Creme 3, die sehr lockere Konsistenz aufweist. Der Waffelverbund könnte sich im Querschnitt zu einem Parallelogramm verschieben.

Um eine Stabilisierung zu erreichen, ist ungefähr mittig in der Cremefüllung 3 eine essbare und plastisch verformbare Trennschicht 5 vorgesehen. Es handelt sich hier beim Ausführungsbeispiel um eine dünne Schicht, gewissermaßen um einen Film aus getrockneter Marmelade. Diese wird separat hergestellt und als Film auf eine erste Lage der Creme 3 aufgelegt bzw. aufgerollt, worauf die zweite Lage der Creme aufgebracht und das Waffelblatt 1 als Deckschicht darübergelegt wird. Die Herstellung erfolgt beispielsweise in Breiten von ca. 50 cm. Durch Längsschnitte und Einschnitte in Querrichtung werden die einzelnen Waffelriegel gebildet.

Die Trennschicht 5 legt sich bei vorzugsweise in der Creme 3 enthaltenen Festkörpern 4 wellig über die Oberfläche der - wie oben beschrieben - auf das Waffelblatt 2 aufgebrachten ersten Schicht der Cremefüllung 3. Die Festkörper 4 beulen die Trennschicht 5 gewissermaßen aus und stellen eine Verbindung her. Wenn die Trennschicht 5 zudem noch Durchbrüche 6 oder gar zungenartige Ausstanzungen aufweist, die in der Cremefüllung 3 weggebogen sind, dann ergibt sich ein besonders guter Halt. Es fließen die beiden Schichten der Creme 3 örtlich ineinander und stabilisieren sich an der Trennschicht. Die Festkörper 4 können riegelartig in die Durchbrüche 6 eingreifen und bilden so eine Sicherung des Waffelverbundes gegen die Wirkung von Scherkräften.

Wie aus Fig. 2 hervorgeht, kann die Breite der Trennschicht 5 geringer sein als die Gesamtbreite des Waffelriegels. Damit bildet die Trennschicht 5 eine Einlage, die auch seitlich durch die Creme 3 umgriffen wird. Auch diese Maßnahme trägt zur Stabilisierung bei. Die Herstellung erfolgt wieder durch Auflegen eines großflächigen Waffelblattes (z.B. 50 x 30 cm) und Bestreichen mit einer ersten Cremelage. Dann werden die fertigen Streifen (z.B. 2,5 x 30 cm) der Trennschicht parallel zueinander und im entsprechenden Abstand (z.B. 5 mm) aufgelegt. Die zweite Cremeschicht 3 kommt darüber und wird mit einem weiteren großflächigen Waffelblatt abgedeckt. Das Schneiden in Längsrichtung wird in den Lücken zwischen den Trennschichten 5 ausgeführt, sodass das Messer mit der Trennschicht 5 nicht in Berührung kommt. Nur in Querrichtung wird auch die Trennschicht 5 durchgeschnitten.

Beim Ausführungsbeispiel wurden als Trennschicht 5 getrocknete Marmeladen eingesetzt, die beim Aufbringen auf eine Unterlage, z.B. eine beheizte Trommel, einen Wassergehalt von mehr als 10% aufweisen. Durch Wärmeeinwirkung seitens der Trommel wurde der Wassergehalt des dünnen aufgetragenen Filmes der Marmelade auf einen Wassergehalt unter 10% gebracht. Es entsteht ein plastischer Film in einer Stärke von 0,5 bis 5 mm. Während Marmelade mit einem Feuchtigkeitsgehalt von mehr als 10% die Waffelblätter aufweicht, bleiben Waffelblätter, selbst wenn die Marmelade unmittelbar als Zwischenlage aufgebracht wird, resch und knusprig, wenn, wie hier, der Wasser- bzw. Feuchtigkeitsgehalt unter 10% gesenkt wird.

Die Gesamtstärke der Cremefüllung liegt bei 5 bis 15 mm mit der Trennschicht in der Mitte. Als Waffelblätter 1, 2 können solche mit einem gitterähnlichen Waffelmuster wie auch glatte Ausführungen mit einer Stärke von üblicherweise 2 bis 5 mm eingesetzt werden.

## Patentansprüche

1. Waffelgebäck aus mindestens zwei Waffelblättern mit dazwischen vorgesehener Cremefüllung, **dadurch gekennzeichnet, dass** die Cremefüllung insbesondere mit einer aufgeschäumten Creme (3) mit einer spezifischen Masse von weniger als 1 g/cm³ essbare Festkörper (4) mit einer spezifischen Masse kleiner als 0,8 g/cm³, wie Reis-, Weizen- oder Popcornflocken, enthält, dass die Schicht der Cremefüllung etwa mittig unterteilt ist und zur Teilung eine vorgefertigte essbare und plastisch verformbare Trennschicht (5), die gegebenenfalls örtlich Durchbrüche (6) aufweist, vorgesehen ist.

2. Waffelgebäck nach Anspruch 1, **dadurch gekennzeichnet, dass** die plastisch verformbare Trennschicht (5) ein Film aus getrockneter Marmelade mit einem Wasseranteil von weniger als 10% ist.

3. Waffelgebäck nach Anspruch 1, **dadurch gekennzeichnet, dass** die plastisch verformbare Trennschicht (5) aus einer Lage aus Marzipan besteht.

4. Waffelgebäck nach einem der Ansprüche 1 bis 3, **dadurch gekennzeichnet, dass** die Trennschicht (5) schmäler und gegebenenfalls kürzer als die Breite und die Länge des fertigen Waffelgebäcks ist.

5. Waffelgebäck nach einem der Ansprüche 1 bis 4, **dadurch gekennzeichnet, dass** die Trennschicht (5) in faltiger oder welliger Form in der Füllung vorgesehen ist.

6. Waffelgebäck nach einem der Ansprüche 1 bis 5, **dadurch gekennzeichnet, dass** die Durchbrüche eine zungenartige Ausstanzung aufweisen und die Zungen aus der Ebene des Filmes herausgebogen sind.

7. Verfahren zur Herstellung einer plastisch verformbaren Trennschicht (5) für ein Waffelgebäck nach Anspruch 1, **dadurch gekennzeichnet, dass** Marmelade in halbflüssiger Form auf eine beheizte oder wärmebestrahlte Unterlage aufgebracht und auf Filmstärke verteilt wird und bei einem Wassergehalt von weniger als 10% von der Unterlage als Folie abgenommen und zur Zwischenlage innerhalb einer Cremefüllung oder unmittelbar zwischen zwei Waffeln abgelegt wird.
